# FASCICULE DE BREVET EUROPEEN

(11) **EP 3 659 923 B1**
(45) Date de publication et mention de la délivrance du brevet: **16.02.2022**
(21) Numéro de dépôt: 19203914.7
(22) Date de dépôt: 17.10.2019
(51) Int. Cl.: B64D 29/08, B64D 29/06, F02K 1/72

(54) **SYSTEME DE PROPULSION D'UN AERONEF COMPORTANT UN CAPOT MOBILE ET ARTICULE**
ANTRIEBSSYSTEM EINES LUFTFAHRZEUGS, DAS EINE BEWEGLICHE ABDECKHAUBE MIT GELENKEN UMFASST
PROPULSION SYSTEM OF AN AIRCRAFT COMPRISING A MOVABLE AND HINGED COVER

(30) Priorité: 30.11.2018 FR 1872156
(43) Date de publication de la demande: 03.06.2020
(73) Titulaire: AIRBUS OPERATIONS (S.A.S.), 31060 Toulouse (FR)
(72) Inventeur: CHARON, Pierre, 31060 TOULOUSE Cedex 9 (FR); JOURNADE, Frédéric, 31060 TOULOUSE Cedex 9 (FR); CAZEAUX, Laurent, 31060 TOULOUSE Cedex 9 (FR); GOUGEON, Pascal, 31060 TOULOUSE Cedex 9 (FR)
(74) Mandataire: Gicquel, Olivier Yves Gérard

(56) Documents cités:
- EP-A2- 2 725 218
- FR-A1- 2 750 168
- US-A1- 2013 277 454
- US-A1- 2016 201 600
- US-B2- 9 759 158

## Description

La présente invention concerne un système de propulsion d'un aéronef qui comporte un capot mobile et articulé, un procédé pour placer un tel système de propulsion en position de maintenance, ainsi qu'un aéronef comportant au moins un tel système de propulsion.

Un aéronef comporte classiquement au moins un système de propulsion qui comporte un moteur formant un noyau autour duquel sont agencés une structure interne fixe (également appelée IFS « Internai Fixed Structure » en Anglo-saxon) entourant le moteur, et des capots extérieurs disposés autour de la structure interne fixe.

Lors des opérations de maintenance du système de propulsion, il est nécessaire d'ouvrir les capots extérieurs afin d'accéder au moteur. Mais comme l'accès est souvent limité et ne permet pas certaines opérations nécessitant des manipulations, il est alors nécessaire de démonter les capots extérieurs pour les déposer au sol afin de pouvoir également démonter la structure interne fixe et ainsi accéder au moteur.

De telles opérations sont relativement longues et pénibles, car il faut démonter et déplacer des pièces relativement lourdes.

Il existe un besoin de proposer un système de propulsion d'un aéronef qui comporte un capot extérieur qui peut être déplacé en translation vers l'arrière de la nacelle pour les opérations de maintenance.

La demande de brevet US2013/277454 décrit un système de propulsion selon le préambule de la revendication 1 qui répond à ce besoin.

L'invention propose un système de propulsion alternatif qui comporte un capot extérieur mobile et articulé qui peut être déplacé en translation avec la structure interne fixe pour les opérations de maintenance. A cet effet, est proposé un système de propulsion d'un aéronef tel que revendiqué dans la revendication 1.

Un tel système de propulsion permet ainsi, lors des opérations de maintenance, de déplacer le capot extérieur et la structure interne fixe vers l'arrière et donc à distance des capots avant afin de dégager le moteur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La figure 1 est une vue de côté d'un aéronef selon l'invention,
La figure 2 est une représentation schématique en vue de face d'un système de propulsion selon l'invention,
La figure 3 est une vue en coupe de côté d'un turboréacteur du système de propulsion selon l'invention dans une position avancée,
La figure 4 est une vue similaire à celle de la figure 3, dans une position reculée,
La figure 5 est une vue similaire à celle de la figure 3, dans une position de décrochage,
La figure 6 est une vue similaire à celle de la figure 3, dans une position écartée,
La figure 7 est une vue en perspective du système de translation du capot mobile,
La figure 8 est une vue de face de la liaison entre le capot mobile et le système de translation, et
La figure 9 est une vue en perspective d'un système de translation motorisé.

Dans la description qui suit, les termes relatifs à une position sont pris en référence au sens d'avancement d'un aéronef.

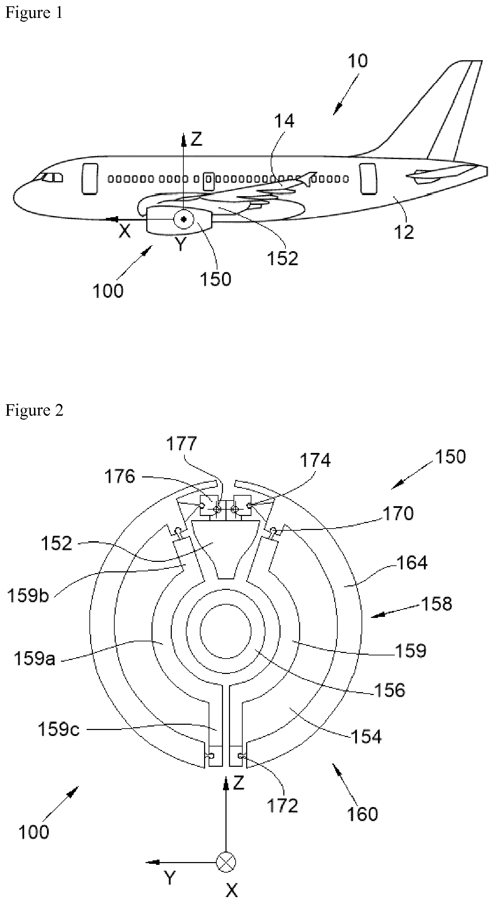

En relation avec la figure 1, un aéronef 10 comporte un fuselage 12 de chaque côté duquel est fixée une aile 14 qui porte au moins un système de propulsion 100 comportant un turboréacteur double flux 150 et un mât 152 qui assure la fixation du turboréacteur double flux 150 sous l'aile 14.

Dans la description qui suit, et par convention, on appelle X l'axe longitudinal du turboréacteur double flux 150 qui est parallèle à l'axe longitudinal de l'aéronef 10 et orienté positivement vers l'avant de l'aéronef 10, on appelle Y l'axe transversal qui est horizontal lorsque l'aéronef 10 est au sol, et Z l'axe vertical lorsque l'aéronef 10 est au sol, ces trois axes X, Y et Z étant orthogonaux entre eux.

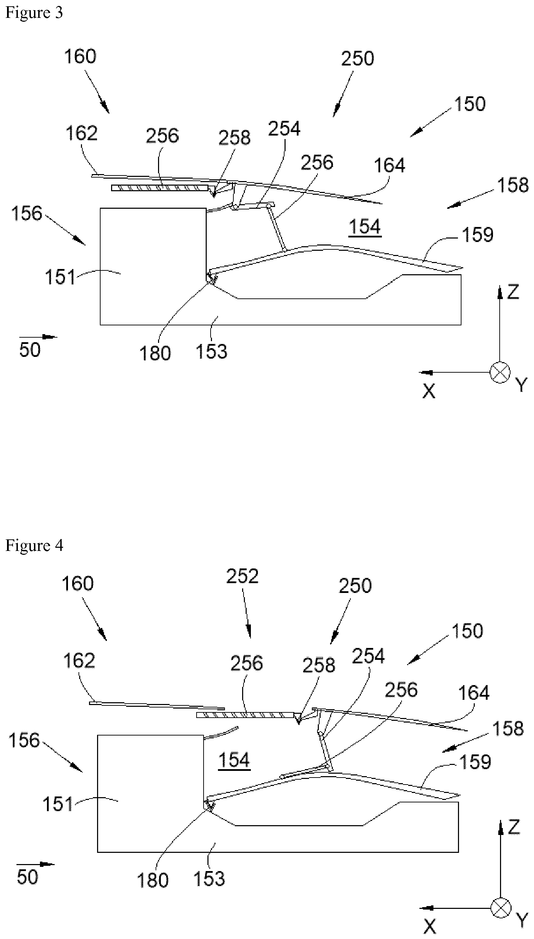

La figure 2 montre schématiquement le système de propulsion 100 qui comporte le turboréacteur double flux 150 et le mât 152 et la figure 3 montre une vue schématique de côté du turboréacteur double flux 150.

Le turboréacteur 150 comporte un moteur 156 avec une soufflante 151 destinée à générer un flux d'air dans le turboréacteur 150 selon une direction de déplacement 50 de l'air dans le turboréacteur 150, où de manière connue, le flux d'air se déplace ensuite en aval de la soufflante 151 pour partie dans une veine primaire 153 du turboréacteur 150 et pour partie dans une veine secondaire 154 du turboréacteur 150.

Le moteur 156 forme un noyau à travers lequel circule l'air de la veine primaire 153 et comportant en série un compresseur moteur, une chambre de combustion et une turbine moteur. La soufflante 151 est à l'avant du moteur 156.

Le moteur 156 est entouré d'une structure interne fixe 158 (également appelée IFS « Internai Fixed Structure » en Anglo-saxon) qui délimite intérieurement la veine secondaire 154. La structure interne fixe 158 est constituée de deux capots internes 159 disposés de part et d'autre du plan milieu XZ du turboréacteur 150. Chaque capot interne 159 comporte ici une partie centrale 159a prenant la forme d'un demi-cylindre dont l'axe est l'axe longitudinal X, et deux extensions 159b-c. Chaque extension 159b-c prend globalement la forme d'une plaque où chacune s'étend dans un plan globalement parallèle au plan milieu XZ. L'extension supérieure 159b s'étend vers le haut depuis le bord supérieur de la partie centrale 159a et l'extension inférieure 159c s'étend vers le bas depuis le bord inférieur de la partie centrale 159a.

En position de fonctionnement du turboréacteur 150, la structure interne fixe 158, c'est-à-dire les capots internes 159, sont fixes par rapport au moteur 156, et en position de maintenance la structure interne fixe 158, c'est-à-dire les capots internes 159, sont libres par rapport au moteur 156. A cette fin, le turboréacteur 150 comporte des moyens de verrouillage 180 qui peuvent prendre alternativement une position de verrouillage dans laquelle ils verrouillent les capots internes 159 au moteur 156, et une position de déverrouillage dans laquelle ils libèrent les capots internes 159 du moteur 156.

Le turboréacteur 150 comporte également une nacelle 160 qui entoure la structure interne fixe 158 et qui comporte un carter de soufflante 162 autour de la soufflante 151 et deux capots extérieurs 164 disposés autour de la structure interne fixe 158, c'est-à-dire des capots internes 159. Les capots extérieurs 164 sont également disposés de part et d'autre du plan milieu XZ du turboréacteur 150. Chaque capot extérieur 164 se trouve autour de l'un des capots internes 159.

Le carter de soufflante 162 est fixe et à l'avant de la nacelle 160 tandis que chaque capot extérieur 164 est à l'arrière du carter de soufflante 162 et est mobile en translation selon une direction de translation globalement parallèle à l'axe longitudinal X. Le carter de soufflante 162 est également constitué de deux capots de soufflante disposés de part et d'autre du plan milieu XZ du turboréacteur 150.

La figure 3 montre le turboréacteur 150 avec les capots extérieurs 164 dans une position avancée, et la figure 4 montre le turboréacteur 150 avec les capots extérieurs 164 dans une position reculée. Les capots extérieurs 164 délimitent extérieurement la veine secondaire 154.

Chaque capot extérieur 164 est monté coulissant parallèlement à la direction de translation sur le capot interne 159 correspondant par l'intermédiaire d'une liaison glissière haute 170 et d'une liaison glissière basse 172. La liaison glissière haute 170 est arrangée en partie haute du turboréacteur 150 et la liaison glissière basse 172 est arrangée en partie basse du turboréacteur 150.

La liaison glissière haute 170 et la liaison glissière basse 172 sont réalisées par tous moyens appropriés comme par exemple une rainure dans l'un parmi le capot extérieur 164 ou le capot interne 159 et un coulisseau solidaire de l'autre parmi le capot interne 159 ou le capot extérieur 164 et qui coulisse dans la rainure. Dans le mode de réalisation de l'invention proposé ici, la liaison glissière haute 170 et la liaison glissière basse 172 sont plus particulièrement mises en œuvre au niveau de l'extension supérieure 159b et de l'extension inférieure 159c.

Chaque capot extérieur 164 est également monté coulissant parallèlement à la direction de translation sur le mât 152 par l'intermédiaire d'une liaison glissière supérieure 174 disposée également en partie haute du turboréacteur 150.

La liaison glissière supérieure 174 comporte, d'une part, une poutre 176 présentant une rainure et, d'autre part, au moins un coulisseau solidaire du capot extérieur 164 qui coulisse dans la rainure.

La poutre 176 est fixée au mât 152 par l'intermédiaire d'une liaison pivot autour d'un axe de rotation 177 globalement parallèle à la direction de translation et donc ici à l'axe longitudinal X, formant ainsi une charnière permettant le déplacement du capot extérieur 164 entre une position fermée dans laquelle le capot extérieur 164 est resserré autour du moteur 156 et une position ouverte dans laquelle le capot extérieur 164 est écarté du moteur 156 en entraînant le capot interne 159 correspondant.

En position fermée, les deux capots extérieurs 164 sont resserrés pour former une continuité aérodynamique avec le carter de soufflante 162.

Le turboréacteur 150 comporte également un système inverseur 250.

Le système inverseur 250 comporte les capots extérieurs 164 qui sont mobiles en translation par rapport au moteur 156 entre une position avancée et une position reculée. En position avancée, les capots extérieurs 164 sont accolés à l'arrière du carter de soufflante 162 et en position reculée, les deux capots extérieurs 164 sont à distance du carter de soufflante 162 pour ouvrir une fenêtre 252 entre la veine secondaire 154 et l'extérieur. La fenêtre 252 est délimitée à l'avant par le carter de soufflante 162 et à l'arrière par les capots extérieurs 164 comme cela est visible sur la figure 4.

Pour déplacer chaque capot extérieur 164 de la position avancée à la position reculée, le turboréacteur 150 comporte un premier système de transmission mécanique qui comprend par exemple des actionneurs tels que des vérins, des moteurs, des crémaillères et qui est commandé par une unité de contrôle de l'aéronef 10. Pour assurer un bon déplacement du capot extérieur 164, il est préférable de prévoir un premier système de transmission mécanique au niveau de la liaison glissière basse 172 et un au niveau de la liaison glissière supérieure 174.

Pour chaque capot extérieur 164, le système inverseur 250 comporte également au moins une porte 254 qui est montée mobile en rotation sur le capot extérieur 164 autour d'un axe globalement perpendiculaire à l'axe longitudinal X.

Chaque porte 254 est mobile entre une position escamotée et une position déployée. En position escamotée (figure 3), la porte 254 n'est pas en travers de la veine secondaire 154 et ne fait donc pas obstacle au passage du flux d'air dans la veine secondaire 154. En position déployée (figure 4), la porte 254 est en travers de la veine secondaire 154 de manière à dévier le flux d'air vers la fenêtre 252. Ici, en position déployée, la porte 254 vient contre le capot interne 159.

Pour chaque porte 254, le système inverseur 250 comporte également un deuxième système de transmission mécanique 256 qui permet de déplacer la porte 254 de la position escamotée à la position déployée lorsque le capot extérieur 164 passe de la position avancée à la position reculée. Ici, le deuxième système de transmission mécanique 256 est une tringle fixée entre la porte 254 et la structure interne fixe 158, mais il pourrait comprendre par exemple des actionneurs tels que des vérins, des moteurs commandés par l'unité de contrôle.

Pour augmenter la déviation du flux d'air sortant par la fenêtre 252, le turboréacteur 150 comporte des cascades 256 qui sont fixées au capot extérieur 164 par l'intermédiaire de moyens de ceinturage 258 qui peuvent prendre alternativement une position de ceinturage dans laquelle ils verrouillent les cascades 256 au capot extérieur 164, et une position de désengagement dans laquelle ils libèrent les cascades 256 du capot extérieur 164.

En position avancée, les cascades 256 se positionnent sous le carter de soufflante 162 et en position reculée, les cascades 256 se positionnent en travers de la fenêtre 252.

Le déplacement en translation des cascades 256 entre la position avancée et la position reculée est également assuré par la liaison glissière supérieure 174, où les cascades 256 comportent au moins un coulisseau qui coulisse dans la rainure de la poutre 176.

Ainsi en position de fonctionnement, lorsque le système inverseur 250 est activé, les capots extérieurs 164 et les cascades 256 sont déplacés vers la position reculée le long de la liaison glissière haute 170, de la liaison glissière basse 172 et de la liaison glissière supérieure 174, entraînant le déplacement de chaque porte 254 vers la position déployée, tandis que les capots internes 159 restent fixes.

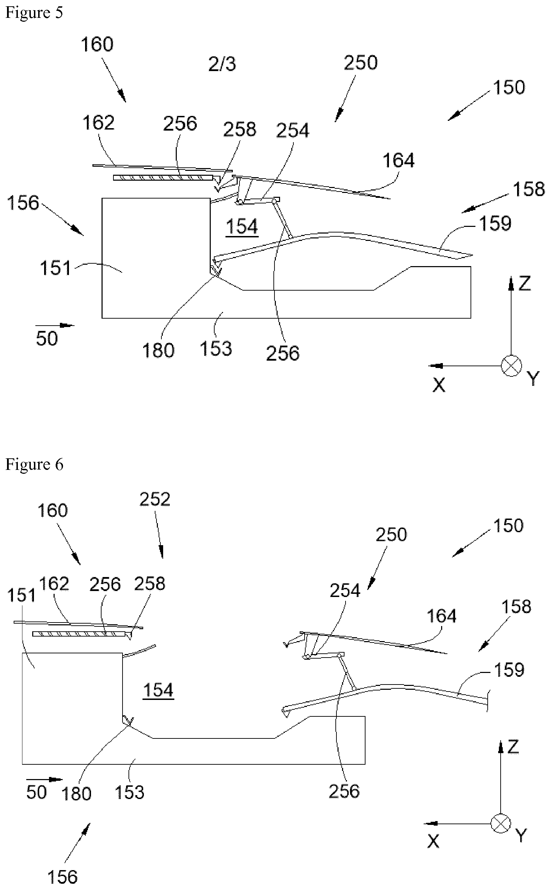

Les figures 5 et 6 correspondent aux phases de maintenance du turboréacteur 150. A partir de la position avancée (figure 5), les moyens de verrouillage 180 sont déverrouillés et les moyens de ceinturage 258 sont désengagés, c'est-à-dire que les capots internes 159 sont libérés du moteur 156 et que les cascades 256 sont libérées du capot extérieur 164.

En passant les capots extérieurs 164 de la position avancée à la position reculée (figure 6), les capots internes 159 se déplacent également vers l'arrière tandis que les cascades 256 restent sous le carter de soufflante 162. Ceci permet de libérer l'accès au moteur 156 sans qu'il soit nécessaire de déposer les différents capots 159 et 164.

Chaque capot de soufflante est également ici fixé au mât 152 par l'intermédiaire d'une liaison pivot autour de l'axe de rotation 177. La liaison pivot est réalisée par tous moyens appropriés comme par exemple des charnières.

Dans le mode de réalisation de l'invention présenté ici, les moyens de verrouillage 180 comportent, d'une part, une rainure qui est ouverte vers l'extérieur, c'est-à-dire radialement par rapport à l'axe longitudinal et la direction de translation, qui s'étend autour du moteur 156 et qui en est solidaire, et, d'autre part, pour chaque capot interne 159, une nervure solidaire du capot interne 159 qui loge dans la rainure en position de verrouillage et en sort en position de déverrouillage. En position de verrouillage des moyens de verrouillage 180, la nervure qui est dans la rainure empêche le déplacement des capots internes 159 parallèlement à la direction de translation. La sortie de la nervure de la rainure est réalisée par un soulèvement de la nervure par rapport à la rainure.

Dans le mode de réalisation de l'invention présenté ici, les moyens de ceinturage 258 comportent, d'une part, une rainure qui est ouverte vers l'extérieur, c'est-à-dire radialement par rapport à l'axe longitudinal et la direction de translation, qui s'étend autour du moteur 156 et qui est solidaire du capot extérieur 164, et, d'autre part, pour chaque cascade 256, une nervure solidaire de la cascade 256 qui loge dans la rainure en position de ceinturage et en sort en position de désengagement. En position de ceinturage des moyens de ceinturage 258, la nervure qui est dans la rainure, permet de solidariser la cascade 256 et le capot extérieur 164 pour assurer les déplacements parallèlement à la direction de translation. La sortie de la nervure de la rainure est réalisée par un abaissement de la rainure vers le moteur 156 par rapport à la nervure.

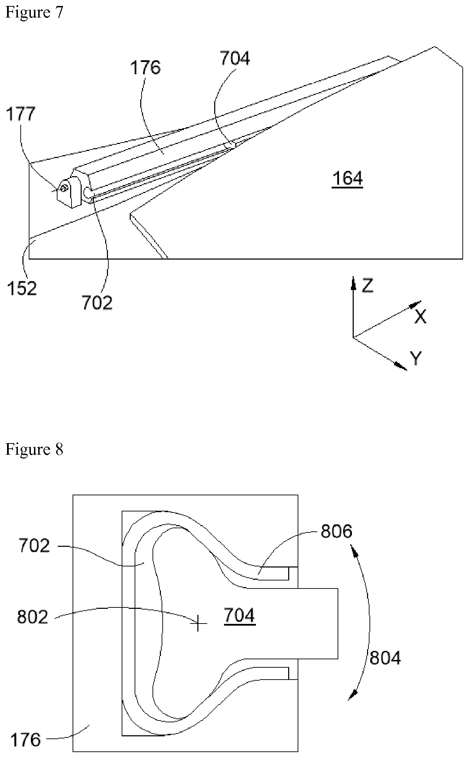

La figure 7 montre la poutre 176 montée sur le mât 152 avec sa rainure 702 et un coulisseau 704 du capot extérieur 164 qui coulisse dans la rainure 702 parallèlement à la direction de translation.

La figure 8 montre une vue de face de la poutre 176 où chaque coulisseau 704 du capot extérieur 164 présente un degré de liberté en translation parallèlement à la direction de translation, ainsi qu'un degré de liberté en rotation autour d'un axe de battement 802 parallèle à la direction de translation et différent de l'axe de rotation 177. C'est-à-dire qu'entre chaque coulisseau 704 du capot extérieur 164 et la rainure 702, il y a une liaison pivot glissant.

Le débattement angulaire (double flèche 804) de la liaison pivot correspondante est limité, il est par exemple de l'ordre de +/- 4 degrés. Le débattement angulaire est suffisant pour permettre le désengagement des moyens de ceinturage 258 en sortant la nervure de la rainure.

Le procédé pour placer le système de propulsion 100 en position de maintenance, c'est-à-dire pour déplacer le capot extérieur 164 et le capot interne 159 vers l'arrière pour laisser la place à un technicien intervenant sur le moteur 156 consiste d'abord à déverrouiller les premiers moyens de verrouillage 180 et les moyens de ceinturage 258.

Le procédé consiste ainsi à :
- déplacer le capot de soufflante et le capot extérieur 164 de la position fermée à la position ouverte par rotation autour de l'axe de rotation 177, ceci va entraîner le déplacement des cascades 256 et du capot interne 159, ce qui va entraîner le déverrouillage des moyens de verrouillage 180 par sortie de la nervure de la rainure,
- déplacer le capot extérieur 164 autour de l'axe de battement 802 pour déloger la nervure de la cascade 256 de la rainure du capot extérieur 164 et ainsi entraîner le désengagement des moyens de ceinturage 258, ce déplacement consiste à rabattre légèrement le capot extérieur 164 vers le moteur 156 par rotation autour de l'axe de battement 802 dans le sens de la position ouverte vers la position fermée, et
- déplacer vers l'arrière le capot extérieur 164 et le capot interne 159 tandis que les cascades 256 restent en position.

Ce procédé s'applique pour chaque côté du turboréacteur 150.

Dans le mode de réalisation de l'invention présenté à la figure 8, le coulisseau 704 présente une section en haricot et il est logé dans une rainure 702 présentant également une section en haricot mais avec des dimensions supérieures.

Le coulisseau 704 et la rainure 702 peuvent présenter d'autres formes de section comme par exemple une section circulaire. Il est suffisant que les dimensions de la rainure 702 soient supérieures aux dimensions du coulisseau 704 pour autoriser la rotation de la liaison pivot glissant.

Dans le mode de réalisation de l'invention présenté à la figure 8, le fond de la rainure 702 est recouvert d'un profilé 806 en particulier métallique et plus particulièrement en aluminium. Ce profilé 806 permet d'améliorer le glissement du coulisseau 704 et de renforcer la poutre 176. La surface intérieure du profilé 806 en contact avec le coulisseau 806 peut être recouverte d'un revêtement glissant.

Comme expliqué ci-dessus, le premier système de transmission mécanique peut comprendre par exemple des actionneurs tels que des vérins, des moteurs...

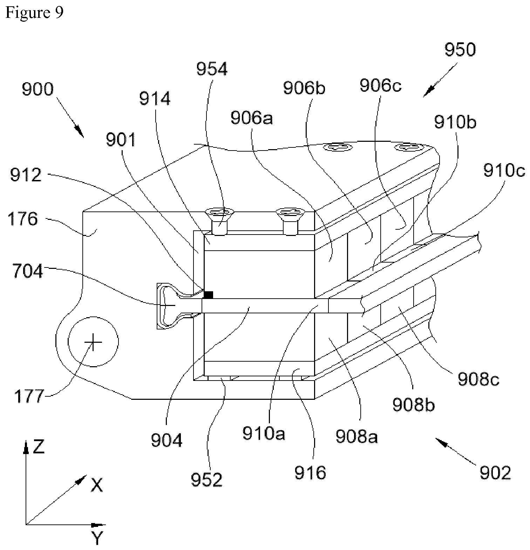

La figure 9 montre un mode de réalisation particulier du premier système de transmission mécanique 900 qui est constitué d'un moteur électrique linéaire synchrone 902 et qui est mis en place au niveau de la liaison glissière supérieure 174. Un tel moteur électrique linéaire 902 peut également être mis en place au niveau de la liaison glissière basse 172 où la poutre constitue une partie du capot interne 159 et le coulisseau constitue une partie du capot extérieur 164.

Chaque moteur électrique linéaire 902 comporte une première série de bobines 906a-c alignées les unes à la suite des autres selon la direction de translation.

Chaque moteur électrique linéaire 902 comporte une deuxième série de bobines 908a-c alignées les unes à la suite des autres selon la direction de translation.

Chaque bobine 908a-c de la deuxième série est en regard d'une bobine 906a-c de la première série.

Chaque poutre 176 comporte un évidement 901 qui s'étend parallèlement à la direction de translation et dans lequel sont logées la première série de bobines 906a-c et la deuxième série de bobines 908a-c.

Chaque moteur électrique linéaire 902 comporte également une bande 904 qui est intégrée au coulisseau 704 et qui s'étend selon la direction de translation et qui est constituée d'une succession d'aimants permanents 910a-c alignés les uns à la suite des autres selon la direction de translation. Les aimants permanents 910a-c sont disposés entre la première série et la deuxième série de bobines 906a-c, 908a-c. Les aimants permanents 910a-c présentent leur pôle Nord alternativement vers la première série de bobines 906a-c et la deuxième série de bobines 908a-c. C'est-à-dire que lorsqu'un aimant permanent 910a-c présente son pôle Nord vers la première série 906a-c et son pôle Sud vers la deuxième série 908a-c, les deux aimants permanents 910a-c voisins présentent leurs pôles Nord vers la deuxième série 908a-c et leurs pôles Sud vers la première série 906a-c.

Dans le mode de réalisation de l'invention présenté à la figure 9, pour chaque série de bobines 906a-c, 908a-c, les bobines de ladite série sont fixées sur une plaque support 914, 916 qui est disposée du côté opposé au coulisseau 704.

Le principe consiste à alimenter les bobines 906a-c et 908a-c de chaque série qui sont en regard des aimants permanents 910a-c, en courant alternatif et déphasées judicieusement, afin de générer une force entraînant le déplacement du coulisseau 704. Deux bobines se faisant face (c'est-à-dire une bobine 906a-c de la première série face à une bobine 908a-c de la seconde série) sont alimentées de manière identique et donc calées de manière identique.

A cette fin, chaque premier système de transmission mécanique 900 comporte un capteur de position 912 qui capte la position du coulisseau 704 le long de la direction de translation et donc la position des aimants permanents 910a-c par rapport aux bobines 906a-c, 908a-c. Le capteur de position 912 est par exemple un capteur magnétique qui détecte le changement de champ magnétique au passage des aimants permanents 910a-c et donc la distance parcourue par le coulisseau 704. A partir de l'information délivrée par le capteur de position 912, l'unité de contrôle détermine les bobines 906a-c, 908a-c qui sont en regard d'un aimant permanent 910a-c.

Une alimentation électrique est prévue pour alimenter chaque bobine 906a-c, 908a-c et elle est commandée par l'unité de contrôle en fonction de l'information délivrée par le capteur de position 912 de manière à alimenter uniquement les bobines 906a-c, 908a-c qui sont en regard d'un aimant permanent 910a-c. L'alimentation sélective des bobines 906a-c, 908a-c permet de déplacer le coulisseau 704 le long de la direction de translation.

Chaque coulisseau 704 peut comporter une portion métallique (constituée d'une simple plaque conductrice ou de brins parallèles entre eux, disposés perpendiculairement à la trajectoire du coulisseau, et reliés aux extrémités) sans aimant dans le prolongement de la bande 904 pour bénéficier des courants de Foucault générés lors du déplacement du coulisseau 704 et assurer ainsi un freinage du coulisseau 704 en fin de course.

Le premier système de transmission mécanique 900 de la liaison glissière supérieure 174 comporte également un système de calage 950 qui peut prendre alternativement une position de calage dans laquelle le système de calage 950 bloque les deux séries de bobines 906a-c, 908a-c, empêchant tout mouvement desdites bobines 906a-c, 908a-c, et une position libre dans laquelle le système de calage 950 ne bloque pas les deux séries de bobines 906a-c, 908a-c, autorisant un mouvement rotatif desdites bobines 906a-c, 908a-c autour de l'axe de battement 802. Ce système de calage 950 permet ainsi de libérer le mouvement du capot extérieur 164 autour de l'axe de battement 802.

Dans le mode de réalisation de l'invention présenté à la figure 9, le système de calage 950 comporte des patins déformables 952 ici au nombre de deux, par exemple en élastomère, et disposés entre une série de bobines, ici la deuxième série de bobines 908a-c, et la poutre 176. Dans le mode de réalisation de l'invention présenté ici, les patins déformables 952 sont plus précisément disposés entre la plaque support 916 et la poutre 176.

Le système de calage 950 comporte également des moyens de mise en pression 954 qui sont disposés à l'opposé des patins déformables 952 contre l'autre série de bobines, ici la première série de bobines 906a-c. Les moyens de mise en pression 954 peuvent prendre alternativement une position de pression dans laquelle ils appuient sur ladite autre série de bobines, pour écraser les patins déformables 952, ou une position de relâche dans laquelle ils n'appuient pas sur ladite autre série de bobines, de manière à relâcher les patins déformables 952.

Les moyens de mise en pression 954 peuvent être par exemple des vis de serrage ou des électro-actuateurs comme des électroaimants, des vérins...

Le moteur électrique synchrone peut être remplacé par un moteur asynchrone.

L'orientation de la direction de translation dépendra de l'encombrement autour du système de propulsion 100. Par exemple, la direction de translation pourra présenter un angle voisin de 90° par rapport à l'axe vertical Z pour garder le carter de soufflante 162 et le capot extérieur 164 alignés en position reculée. Par exemple, la direction de translation pourra présenter un angle voisin de 90° par rapport à l'axe transversal Y pour échapper à la voilure de l'aéronef 10 lors du déploiement.

Selon un exemple, l'unité de contrôle comprend, reliés par un bus de communication: un processeur ou CPU (« Central Processing Unit » en anglais) ; une mémoire vive RAM (« Random Access Memory » en anglais) ; une mémoire morte ROM (« Read Only Memory » en anglais) ; une unité de stockage telle qu'un disque dur ou un lecteur de support de stockage, tel qu'un lecteur de cartes SD (« Secure Digital » en anglais) ; au moins une interface de communication, permettant par exemple à l'unité de contrôle de communiquer avec l'alimentation électrique, le capteur de position 912, les systèmes de transmission mécanique.

Le processeur est capable d'exécuter des instructions chargées dans la RAM à partir de la ROM, d'une mémoire externe (non représentée), d'un support de stockage (tel qu'une carte SD), ou d'un réseau de communication. Lorsque l'équipement est mis sous tension, le processeur est capable de lire de la RAM des instructions et de les exécuter. Ces instructions forment un programme d'ordinateur causant la mise en œuvre, par le processeur, de tout ou partie des algorithmes et étapes décrits ci-dessus.

Tout ou partie des algorithmes et étapes décrits ci-après peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gâte Array » en anglais) ou un ASIC (« Application-Specific Integrated Circuit » en anglais).

## Revendications

1. Système de propulsion (100) d'un aéronef (10) comportant un turboréacteur double flux (150) et un mât (152), où le turboréacteur double flux (150) comporte un moteur (156) avec une soufflante (151), deux capots internes (159) entourant le moteur (156), un carter de soufflante (162) et deux capots extérieurs (164) entourant les capots internes (159) pour définir une veine secondaire (154) et disposés à l'arrière du carter de soufflante (162),
où les capots extérieurs (164) sont mobiles en translation par rapport au moteur (156) entre une position avancée dans laquelle les capots extérieurs (164) sont accolés à l'arrière du carter de soufflante (162) et une position reculée dans laquelle les deux capots extérieurs (164) sont à distance du carter de soufflante (162) pour ouvrir une fenêtre (252) entre la veine secondaire (154) et l'extérieur,
où le turboréacteur double flux (150) comporte en outre, pour chaque capot extérieur (164), au moins une porte (254) montée mobile en rotation sur le capot extérieur (164) entre une position escamotée dans laquelle la porte (254) n'est pas en travers de la veine secondaire (154) et une position déployée dans laquelle la porte (254) est en travers de la veine secondaire (154) pour dévier le flux d'air vers la fenêtre (252),
où le turboréacteur double flux (150) comporte en outre, des cascades (256) qui sont fixées au capot extérieur (164) par l'intermédiaire de moyens de ceinturage (258) qui peuvent prendre alternativement une position de ceinturage dans laquelle ils verrouillent les cascades (256) au capot extérieur (164), et une position de désengagement dans laquelle ils libèrent les cascades (256) du capot extérieur (164),
où chaque capot extérieur (164) est monté coulissant parallèlement à une direction de translation sur le capot interne (159) correspondant et où chaque capot extérieur (164) est monté coulissant parallèlement à la direction de translation sur le mât (152),
le turboréacteur (150) comportant des moyens de verrouillage (180) qui peuvent prendre
alternativement une position de verrouillage dans laquelle ils verrouillent les capots internes (159) du moteur (156), et une position de déverrouillage dans laquelle ils libèrent les capots internes (159) du moteur (156), capot extérieur (164) étant monté coulissant sur le capot interne (159)
correspondant par l'intermédiaire d'une liaison glissière haute (170) et d'une liaison glissière basse (172) et sur le mât (152) par l'intermédiaire d'une liaison glissière supérieure (174)
où la liaison glissière supérieure (174) comporte, d'une part, une poutre (176) présentant une rainure et, d'autre part, au moins un coulisseau (704) solidaire du capot extérieur (164) qui coulisse dans la rainure et au moins un coulisseau solidaire des cascades (256) qui coulisse dans la rainure, où la poutre (176) est fixée au mât (152) par l'intermédiaire d'une liaison pivot autour d'un axe de rotation (177) parallèle à la direction de translation permettant le déplacement du capot extérieur (164) entre une position fermée dans laquelle le capot extérieur (164) est resserré autour du moteur (156) et une position ouverte dans laquelle le capot extérieur (164) est écarté du moteur (156).

2. Système de propulsion (100) selon la revendication 1, **caractérisé en ce que** le carter de soufflante (162) est constitué de deux capots de soufflante, chacun étant fixé au mât (152) par l'intermédiaire d'une liaison pivot autour de l'axe de rotation (177) permettant le déplacement de chaque capot de soufflante entre la position fermée et la position ouverte, **en ce que** les moyens de verrouillage (180) comportent, d'une part, une rainure qui est ouverte vers l'extérieur, qui s'étend autour du moteur (156) et qui en est solidaire, et, d'autre part, pour chaque capot interne (159), une nervure solidaire du capot interne (159) qui loge dans la rainure en position de verrouillage et en sort en position de déverrouillage, **en ce que** les moyens de ceinturage (258) comportent, d'une part, une rainure qui est ouverte vers l'extérieur, qui s'étend autour du moteur (156) et qui est solidaire du capot extérieur (164), et, d'autre part, pour chaque cascade (256), une nervure solidaire de la cascade (256) qui loge dans la rainure en position de ceinturage et en sort en position de désengagement, et **en ce que** la liaison entre chaque coulisseau (704) du capot extérieur (164) et la rainure (702) est une liaison pivot glissant.

3. Système de propulsion (100) selon l'une des revendications 1 ou 2, **caractérisé en ce qu'**il comporte un premier système de transmission mécanique (900) au niveau de la liaison glissière supérieure (174) et un premier système de transmission mécanique (900) au niveau de la liaison glissière basse (172) avec une poutre constituant une partie du capot interne (159) et un coulisseau constituant une partie du capot extérieur (164).

4. Système de propulsion (100) selon la revendication 3, **caractérisé en ce que** la poutre (176) de la liaison glissière supérieure (174) et la poutre de la liaison glissière basse (172) comportent chacune un évidement (901) qui s'étend parallèlement à la direction de translation, **en ce que** chaque premier système de transmission mécanique (900) comporte :
- une première série de bobines (906a-c) alignées les unes à la suite des autres selon la direction de translation,
- une deuxième série de bobines (908a-c) alignées les unes à la suite des autres selon la direction de translation, où la première série de bobines (906a-c) et la deuxième série de bobines (908a-c) sont logées dans l'évidement (901),
- une bande (904) qui est intégrée au coulisseau (704), qui s'étend selon la direction de translation et qui est constituée d'une succession d'aimants permanents (910a-c) alignés les uns à la suite des autres selon la direction de translation, où les aimants permanents (910a-c) sont disposés entre la première série et la deuxième série de bobines (906a-c, 908a-c), où deux aimants permanents (910a-c) consécutifs présentent leur pôle Nord alternativement vers la première série de bobines (906a-c) et la deuxième série de bobines (908a-c),
- un capteur de position (912) configuré pour capter la position du coulisseau (704) le long de la direction de translation,
- une alimentation électrique pour alimenter les bobines (906a-c, 908a-c), et
- une unité de contrôle configurée pour commander l'alimentation électrique en fonction de l'information délivrée par le capteur de position (912) de manière à alimenter uniquement les bobines (906a-c, 908a-c) qui sont en regard d'un aimant permanent (910a-c), et **en ce que**
le premier système de transmission mécanique (900) de la liaison glissière supérieure (174) comporte un système de calage (950) qui peut prendre alternativement une position de calage dans laquelle le système de calage (950) bloque les deux séries de bobines (906a-c, 908a-c), et une position libre dans laquelle le système de calage (950) ne bloque pas les deux séries de bobines (906a-c, 908a-c).

5. Système de propulsion (100) selon la revendication 4, **caractérisé en ce que** le système de calage (950) comporte des patins déformables (952) disposés entre une série de bobines et la poutre (176), et des moyens de mise en pression (954) disposés à l'opposé des patins déformables (952) contre l'autre série de bobines et pouvant prendre alternativement une position de pression dans laquelle ils appuient sur ladite autre série de bobines, pour écraser les patins déformables (952), ou une position de relâche dans laquelle ils n'appuient pas sur ladite autre série de bobines, de manière à relâcher les patins déformables (952).

6. Procédé pour placer le système de propulsion (100) de la revendication 2 en position de maintenance consistant à :
- déplacer le capot de soufflante et le capot extérieur (164) de la position fermée à la position ouverte par rotation autour de l'axe de rotation (177), en entraînant les cascades (256) et le capot interne (159), et le déverrouillage des premiers moyens de verrouillage (180),
- déplacer le capot extérieur (164) autour de l'axe de battement (802) pour déloger la nervure de la cascade (256) de la rainure du capot extérieur (164), et
- déplacer vers l'arrière le capot extérieur (164) et le capot interne (159) tandis que les cascades (256) restent en position.

7. Aéronef (10) comportant au moins un système de propulsion (100) selon l'une quelconques des revendications 1 à 5.

## Patentansprüche

1. Antriebssystem (100) eines Luftfahrzeugs (10), welches ein Mantelstromtriebwerk (150) und einen Pylon (152) aufweist, wobei das Mantelstromtriebwerk (150) ein Kerntriebwerk (156) mit einem Gebläse (151), zwei das Kerntriebwerk (156) umgebende innere Hauben (159), ein Gebläsegehäuse (162) und zwei äußere Hauben (164), welche die inneren Hauben (159) umgeben, um einen Mantelstromkanal (154) zu definieren, und hinter dem Gebläsegehäuse (162) angeordnet sind, aufweist,
wobei die äußeren Hauben (164) in Bezug auf das Kerntriebwerk (156) translatorisch beweglich sind zwischen einer vorgeschobenen Position, in welcher die äußeren Hauben (164) hinten an das Gebläsegehäuse (162) angefügt sind, und einer zurückgeschobenen Position, in welcher sich die zwei äußeren Hauben (164) in einem Abstand von dem Gebläsegehäuse (162) befinden, um ein Fenster (252) zwischen dem Mantelstromkanal (154) und der Außenseite zu öffnen,
wobei das Mantelstromtriebwerk (150) außerdem für jede äußere Haube (164) wenigstens eine Klappe (254) aufweist, die an der äußeren Haube (164) drehbeweglich gelagert ist zwischen einer angeklappten Position, in welcher die Klappe (254) nicht quer zum Mantelstromkanal (154) angeordnet ist, und einer ausgeklappten Position, in welcher die Klappe (254) quer zum Mantelstromkanal (154) angeordnet ist, um den Luftstrom zum Fenster (252) hin umzulenken,
wobei das Mantelstromtriebwerk (150) außerdem Kaskaden (256) aufweist, welche an der äußeren Haube (164) durch Umklammerungsmittel (258) befestigt sind, welche wahlweise eine Umklammerungsposition, in welcher sie die Kaskaden (256) an der äußeren Haube (164) verriegeln, und eine Löseposition, in welcher sie die Kaskaden (256) von der äußeren Haube (164) lösen, einnehmen können,
wobei jede äußere Haube (164) auf der entsprechenden inneren Haube (159) parallel zu einer Translationsrichtung verschiebbar gelagert ist und wobei jede äußere Haube (164) auf dem Pylon (152) parallel zu der Translationsrichtung verschiebbar gelagert ist,
wobei das Triebwerk (150) Verriegelungsmittel (180) aufweist, welche wahlweise eine Verriegelungsposition, in welcher sie die inneren Hauben (159) des Kerntriebwerks (156) verriegeln, und eine Entriegelungsposition, in welcher sie die inneren Hauben (159) des Kerntriebwerks (156) freigeben, einnehmen können,
wobei jede äußere Haube (164) auf der entsprechenden inneren Haube (159) durch eine obenliegende Gleitverbindung (170) und eine untenliegende Gleitverbindung (172) und auf dem Pylon (152) durch eine obere Gleitverbindung (174) verschiebbar gelagert ist,
wobei die obere Gleitverbindung (174) einerseits einen Träger (176), der eine Nut aufweist, und andererseits wenigstens ein mit der äußeren Habe (164) fest verbundenes Gleitstück (704), welches in der Nut gleitet, und wenigstens ein mit den Kaskaden (256) fest verbundenes Gleitstück, welches in der Nut gleitet, aufweist, wobei der Träger (176) am Pylon (152) durch eine Schwenkverbindung um eine zur Translationsrichtung parallele Drehachse (177) befestigt ist, welche die Bewegung der äußeren Haube (164) zwischen einer geschlossenen Position, in welcher die äußere Haube (164) das Kerntriebwerk (156) eng umschließt, und einer geöffneten Position, in welcher die äußere Haube (164) vom Kerntriebwerk (156) beabstandet ist, ermöglicht.

2. Antriebssystem (100) nach Anspruch 1, **dadurch gekennzeichnet, dass** das Gebläsegehäuse (162) aus zwei Gebläsehauben besteht, die jeweils am Pylon (152) durch eine Schwenkverbindung um die Drehachse (177) befestigt sind, welche die Bewegung jeder Gebläsehaube zwischen der geschlossenen Position und der geöffneten Position ermöglicht, dadurch, dass die Verriegelungsmittel (180) einerseits eine Nut aufweisen, welche nach außen hin offen ist, welche sich um das Kerntriebwerk (156) herum erstreckt und welche mit diesem fest verbunden ist, und andererseits, für jede innere Haube (159), eine mit der inneren Haube (159) fest verbundene Rippe, welche in der Verriegelungsposition in der Nut aufgenommen ist und in der Entriegelungsposition aus dieser austritt, dadurch, dass die Umklammerungsmittel (258) einerseits eine Nut aufweisen, welche nach außen hin offen ist, welche sich um das Kerntriebwerk (156) herum erstreckt und welche mit der äußeren Haube (164) fest verbunden ist, und andererseits, für jede Kaskade (256), eine mit der Kaskade (256) fest verbundene Rippe, welche in der Umklammerungsposition in der Nut aufgenommen ist und in der Löseposition aus dieser austritt, und dadurch, dass die Verbindung zwischen jedem Gleitstück (704) der äußeren Haube (164) und der Nut (702) eine gleitende Schwenkverbindung ist.

3. Antriebssystem (100) nach einem der Ansprüche 1 oder 2, **dadurch gekennzeichnet, dass** es ein erstes mechanisches Getriebesystem (900) an der oberen Gleitverbindung (174) und ein erstes mechanisches Getriebesystem (900) an der untenliegenden Gleitverbindung (172) aufweist, mit einem Träger der ein Bestandteil der inneren Haube (159) ist, und einem Gleitstück, das ein Bestandteil der äußeren Haube (164) ist.

4. Antriebssystem (100) nach Anspruch 3, **dadurch gekennzeichnet, dass** der Träger (176) der oberen Gleitverbindung (174) und der Träger der untenliegenden Gleitverbindung (172) jeweils eine Aussparung (901) aufweisen, welche sich parallel zur Translationsrichtung erstreckt, dadurch, dass jedes erste mechanische Getriebesystem (900) aufweist:
- eine erste Reihe von Spulen (906a-c), die hintereinander in der Translationsrichtung aufgereiht sind,
- eine zweite Reihe von Spulen (908a-c), die hintereinander in der Translationsrichtung aufgereiht sind, wobei die erste Reihe von Spulen (906a-c) und die zweite Reihe von Spulen (908a-c) in der Aussparung (901) aufgenommen sind,
- einen Streifen (904), welcher in das Gleitstück (704) integriert ist, welcher sich in der Translationsrichtung erstreckt und welcher aus einer Folge von Permanentmagneten (910a-c) besteht, die hintereinander in der Translationsrichtung aufgereiht sind, wobei die Permanentmagneten (910a-c) zwischen der ersten Reihe und der zweiten Reihe von Spulen (906a-c, 908a-c) angeordnet sind, wobei zwei aufeinander folgende Permanentmagnete (910a-c) ihren Nordpol abwechselnd zur ersten Reihe von Spulen (906a-c) und zur zweiten Reihe von Spulen (908a-c) hin aufweisen,
- einen Positionssensor (912), der dafür ausgelegt ist, die Position des Gleitstücks (704) in der Translationsrichtung zu erfassen,
- eine Stromversorgung zur Versorgung der Spulen (906a-c, 908a-c) und
- eine Steuereinheit, die dafür ausgelegt ist, die Stromversorgung in Abhängigkeit von den Informationen zu steuern, die von dem Positionssensor (912) gelliefert werden, um ausschließlich die Spulen (906a-c, 908a-c) zu versorgen, die sich gegenüber einem Permanentmagneten (910a-c) befinden,
und dadurch, dass das erste mechanische Getriebesystem (900) der oberen Gleitverbindung (174) ein Sicherungssystem (950) aufweist, welches wahlweise eine Sicherungsposition, in welcher das Sicherungssystem (950) die zwei Reihen von Spulen (906a-c, 908a-c) blockiert, und eine freie Position, in welcher das Sicherungssystem (950) die zwei Reihen von Spulen (906a-c, 908a-c) nicht blockiert, einnehmen kann.

5. Antriebssystem (100) nach Anspruch 4, **dadurch gekennzeichnet, dass** das Sicherungssystem (950) verformbare Kissen (952) aufweist, die zwischen einer Reihe von Spulen und dem Träger (176) angeordnet sind, und Mittel zur Druckbeaufschlagung (954), die gegenüber den verformbaren Kissen (952) an der anderen Reihe von Spulen angeordnet sind und wahlweise eine Druckposition, in welcher sie auf die andere Reihe von Spulen Druck ausüben, um die verformbaren Kissen (952) zusammenzudrücken, oder eine Lockerungsposition, in welcher sie keinen Druck auf die andere Reihe von Spulen ausüben, so dass die verformbaren Kissen (952) losgelassen werden, einnehmen können.

6. Verfahren zum Stellen des Antriebssystems (100) von Anspruch 2 in eine Wartungsposition, welches in Folgendem besteht:
- Bewegen der Gebläsehaube und der äußeren Haube (164) aus der geschlossenen Position in die geöffnete Position durch Drehung um die Drehachse (177), wobei die Kaskaden (256) und die innere Haube (159) mitgenommen werden, und durch die Entriegelung der ersten Verriegelungsmittel (180),
- Bewegen der äußeren Haube (164) um die Schlagachse (802), um die Rippe der Kaskade (256) aus der Nut der äußeren Haube (164) hinauszubewegen, und
- Bewegen der äußeren Haube (164) und der inneren Haube (159) nach hinten, während die Kaskaden (256) an ihrer Position verbleiben.

7. Luftfahrzeug (10), welches wenigstens ein Antriebssystem (100) nach einem der Ansprüche 1 bis 5 aufweist.

## Claims

1. Propulsion system (100) for an aircraft (10) comprising a bypass turbine engine (150) and a pylon (152), in which the bypass turbine engine (150) comprises an engine (156) with a fan (151), two internal cowls (159) surrounding the engine (156), a fan case (162) and two outer cowls (164) surrounding the internal cowls (159) to define a secondary flow path (154) and positioned to the rear of the fan case (162),
in which the outer cowls (164) are able to move in translation with respect to the engine (156) between a forward position in which the outer cowls (164) are against the rear of the fan case (162) and a retracted position in which the two outer cowls (164) are distant from the fan case (162) to open up a window (252) between the secondary flow path (154) and the outside,
in which the bypass turbine engine (150) further comprises, for each outer cowl (164), at least one door (254) mounted with the ability to rotate on the outer cowl (164) between a non-obstructing position in which the door (254) is not across the secondary flow path (154) and a deployed position in which the door (254) is across the secondary flow path (154) in order to divert the flow of air towards the window (252),
in which the bypass turbine engine (150) further comprises cascades of vanes (256) which are fixed to the outer cowl (164) via hooping means (258) which may alternately adopt a hooping position in which they lock the cascades of vanes (256) to the outer cowl (164) and a disengaged position in which they release the cascades of vanes (256) from the outer cowl (164),
in which each outer cowl (164) is mounted with the ability to slide parallel to a direction of translation on the corresponding internal cowl (159) and in which each outer cowl (164) is mounted with the ability to slide parallel to the direction of translation on the pylon (152),
the turbine engine (150) comprising locking means (180) which can alternately adopt a locked position in which they lock the internal cowls (159) of the engine (156) and an unlocked position in which they release the internal cowls (159) of the engine (156),
each outer cowl (164) being mounted with the ability to slide on the corresponding internal cowl (159) via a top guideway connection (170) and a bottom guideway connection (172) and on the pylon (152) via an upper guideway connection (174),
in which the upper guideway connection (174) comprises, on the one hand, a beam (176) having a slot and, on the other hand, at least one slider (704) secured to the outer cowl (164) which slides in the slot and at least one slider secured to the cascades of vanes (256) which slides in the slot, in which the beam (176) is fixed to the pylon (152) via a pivot connection about an axis of rotation (177) parallel to the direction of translation allowing the outer cowl (164) to move between a closed position in which the outer cowl (164) is closed up around the engine (156) and an open position in which the outer cowl (164) is distant from the engine (156).

2. Propulsion system (100) according to Claim 1, **characterized in that** the fan case (162) is made up of two fan cowls, each one being fixed to the pylon (152) via a pivot connection pivoting about the axis of rotation (177) allowing each fan cowl to move between the closed position and the open position, **in that** the locking means (180) comprise, on the one hand, a slot which is open towards the outside, which extends around the engine (156) and which is secured thereto and, on the other hand, for each internal cowl (159), a rib secured to the internal cowl (159) which is housed in the slot in the locked position and which comes out of the slot in the unlocked position, **in that** the hooping means (258) comprise, on the one hand, a slot which is open towards the outside, which extends around the engine (156) and which is secured to the outer cowl (164) and, on the other hand, for each cascade of vanes (256), a rib secured to the cascade of vanes (256) which is housed in the slot in the hooping position and comes out of the slot in the disengaged position, and **in that** the connection between each slider (704) of the outer cowl (164) and the slot (702) is a sliding pivot connection.

3. Propulsion system (100) according to one of Claims 1 and 2, **characterized in that** it comprises a first mechanical transmission system (900) at the upper guideway connection (174) and a first mechanical transmission system (900) at the bottom guideway connection (172) with a beam constituting part of the internal cowl (159) and a slider constituting part of the outer cowl (164).

4. Propulsion system (100) according to Claim 3, **characterized in that** the beam (176) of the upper guideway connection (174) and the beam of the bottom guideway connection (172) each comprise an opening (901) which extends parallel to the direction of translation, **in that** each first mechanical transmission system (900) comprises:
- a first series of coils (906a-c) aligned one after the other in the direction of translation,
- a second series of coils (908a-c) aligned one after the other in the direction of translation, in which the first series of coils (906a-c) and the second series of coils (908a-c) are housed in the opening (901),
- a strip (904) which is incorporated into the slider (704), which extends in the direction of translation and which is made up of a succession of permanent magnets (910a-c) aligned one after the other in the direction of translation, in which the permanent magnets (910a-c) are arranged between the first series and the second series of coils (906a-c, 908a-c), in which two consecutive permanent magnets (910a-c) have their north pole facing alternately towards the first series of coils (906a-c) and towards the second series of coils (908a-c),
- a position sensor (912) configured to sense the position of the slider (704) in the direction of translation,
- an electrical power supply to power the coils (906a-c, 908a-c), and
- a control unit configured to control the electrical power supply according to the information delivered by the position sensor (912) so as to power only those coils (906a-c, 908a-c) that are facing a permanent magnet (910a-c), and **in that**
the first mechanical transmission system (900) of the upper guideway connection (174) comprises a blocking system (950) which can alternately adopt a blocking position in which the blocking system (950) blocks the two series of coils (906a-c, 908a-c), and a release position in which the blocking system (950) does not block the two series of coils (906a-c, 908a-c).

5. Propulsion system (100) according to Claim 4, **characterized in that** the blocking system (950) comprises deformable runners (952) positioned between a series of coils and the beam (176), and pressurizing means (954) arranged on the opposite side to the deformable runners (952) against the other series of coils and able alternately to adopt a pressing position in which they press against the said other series of coils, in order to compress the deformable runners (952), or a relaxed position in which they do not press on the said other series of coils, so as to relax the deformable runners (952) .

6. Method for placing the propulsion system (100) of Claim 2 in a maintenance position, consisting in:
- moving the fan cowl and the outer cowl (164) from the closed position into the open position by rotation about the axis of rotation (177), bringing with them the cascades of vanes (256) and the internal cowl (159), and unlocking the first locking means (180),
- moving the outer cowl (164) about the axis of excursion (802) in order to dislodge the rib of the cascade of vanes (256) from the slot in the outer cowl (164), and
- moving the outer cowl (164) and the internal cowl (159) towards the rear while the cascades of vanes (256) remain in position.

7. Aircraft (10) comprising at least one propulsion system (100) according to any one of Claims 1 to 5.
